# DEMANDE DE BREVET EUROPEEN

(11) **EP 4 386 912 A1**
(43) Date de publication de la demande: **19.06.2024**
(21) Numéro de dépôt: 23208736.1
(22) Date de dépôt: 09.11.2023
(51) Int. Cl.: H01M 8/04225, H01M 8/04223, H01M 8/04302

(54) **PROCÉDÉ D'ACTIVATION D'UNE PILE À COMBUSTIBLE PAR ÉLECTROLYSE**

(30) Priorité: 10.11.2022 FR 2211720
(71) Demandeur: Commissariat à l'énergie atomique et aux énergies alternatives, 75015 Paris (FR); Institut Polytechnique de Grenoble, 38000 Grenoble (FR); Université Savoie Mont Blanc, 73000 Chambéry (FR); Centre National de la Recherche Scientifique, 75016 Paris Cedex 16 (FR); Université Grenoble Alpes, 38400 Saint-Martin-d'Hères (FR)
(72) Inventeur: PINTON, Eric, 38054 Grenoble cedex 09 (FR); BULTEL, Yann, 38402 Saint Martin d'Hères (FR); DRUGEOT, Timothée, 38054 Grenoble cedex 09 (FR); MICOUD, Fabrice, 38054 Grenoble cedex 09 (FR)
(74) Mandataire: Hautier IP

(57) **Abrégé**

L'invention porte sur un procédé d'activation d'une pile à combustible (100) comprenant une pluralité de cellules électrochimiques en empilement,
la pile à combustible étant destinée à fonctionner, lors d'au moins une phase de fonctionnement nominale (300), en générateur électrique,
le procédé comprenant, lors d'une phase d'activation par électrolyse (200) préalable à l'au moins une phase de fonctionnement nominale (300) :
- Une alimentation électrique (202) de la pile à combustible par un générateur électrique (2) externe, ladite alimentation électrique étant configurée pour appliquer une tension d'activation supérieure à la tension de la pile en circuit ouvert (OCV),
- Une alimentation fluidique (201) en gaz humide au niveau de l'une au moins parmi les première et deuxième électrodes (11, 12), ledit gaz humide présentant une Humidité Relative (HR) telle que 40% ≤ HR < 100%,

de sorte que la pile à combustible fonctionne en électrolyse lors de la phase d'activation (200) dite par électrolyse.

## Description

### DOMAINE TECHNIQUE

La présente invention concerne le domaine des piles à combustibles, en particulier les piles à combustible à membrane échangeuse de protons (ou PEMFC pour Proton Exchange Membrane Fuel Cell). Elle peut être mise en oeuvre pour conditionner ou activer une PEFMC, et optimiser les performances de celle-ci.

### ETAT DE LA TECHNIQUE

Une pile à combustible est formée d'un empilement de cellules électrochimiques « unitaires », comportant chacune une anode et une cathode séparées électriquement l'une de l'autre par un électrolyte. Dans le cas d'une pile à hydrogène, le combustible (l'hydrogène) est apporté au contact de l'anode, et le comburant (l'oxygène) est amené au contact de la cathode. Lors du fonctionnement de la pile en générateur de courant, le combustible et le comburant sont consommés par des réactions d'oxydation et de réduction qui ont respectivement lieu au niveau de l'anode et de la cathode. Ces réactions produisent de l'électricité, de l'eau et de la chaleur. La température nominale de fonctionnement de la pile se situe généralement aux alentours de 80°C.

L'électrolyte peut se présenter sous forme d'une membrane laissant passer les protons issus de la réaction d'oxydation de l'hydrogène. C'est le cas des piles à combustible à membrane échangeuse de protons (PEMFC). Une telle membrane est généralement composée d'un polymère solide perfluoro-sulfoné appelé ionomère. Les électrodes sont typiquement poreuses, pour favoriser le transport des gaz combustible et comburant, et permettre l'évacuation de l'eau produite. Chaque électrode comprend typiquement deux couches : une couche de diffusion des gaz, typiquement à base de carbone, et une couche catalytique, généralement à base de nanoparticules de platine déposées sur du carbone (Pt/C) poreux. Les couches catalytiques sont disposées contre la membrane, de sorte que des nanoparticules de platine soient à l'interface avec l'ionomère. Les couches catalytiques - également appelées couches actives - sont ainsi intercalées entre les couches de diffusion des gaz et la membrane. La membrane, les couches de diffusion et les couches catalytiques sont couramment désignées par l'acronyme AME signifiant « Assemblage Membrane Electrodes ».

Lors de la mise en oeuvre de la PEMFC, une phase de conditionnement initiale est généralement effectuée. Cette phase de conditionnement permet à la PEMFC d'atteindre ses performances nominales.

Cette toute première phase de fonctionnement de la PEMFC s'effectue de manière générale dans des conditions favorables en termes d'humidité et de température afin d'hydrater correctement la membrane et « d'activer » les couches catalytiques pour augmenter progressivement les performances initiales de la pile et atteindre ses performances nominales.

Les phénomènes intervenant lors de cette phase de conditionnement, encore appelée phase d'« activation » ou « de rodage », peuvent comprendre à la fois l'hydratation de l'ionomère dans la membrane et dans les couches actives, et/ou la dépollution des couches catalytiques et des couches de diffusion dans leur ensemble.

En tout état de cause, la phase de conditionnement ou d'activation produit une amélioration des performances de la PEMFC et est donc un requis préalable au fonctionnement nominal de la pile.

Le document « Advances in rapid and effective break-in/conditioning/recovery of automotive PEMFC stacks, Shyam S. Kocha et al., Current Opinion in Electrochemistry, vol.31, 100843 (2022) » divulgue différents procédés d'activation d'une PEFMC. Tous ces procédés sont basés sur un fonctionnement en générateur de la pile à basse tension, avec une tension par cellule ≤ 1 V. Ces nombreux procédés indiquent qu'il existe un besoin consistant à améliorer les procédures d'activation actuelles. Les performances électrochimiques des cellules, notamment à haute densité de courant, peuvent encore être améliorées.

Le document JPH06196187A divulgue une méthode d'activation d'une pile à combustible impliquant un fonctionnement en électrolyse de la pile. Des oxydes de platine (catalyseur) sont typiquement formés lors de l'électrolyse. Cette méthode ne permet pas de réduire les oxydes de platine.

Un objet de la présente invention est de proposer un procédé d'activation d'une pile à combustible améliorant les performances électrochimiques des cellules vis-à-vis des procédés connus et/ou palliant les inconvénients mentionnés ci-dessus.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un mode de réalisation on prévoit un procédé d'activation d'une pile à combustible comprenant une pluralité de cellules électrochimiques en empilement, chaque cellule comprenant une première électrode, une deuxième électrode, et une membrane échangeuse de protons intercalée entre lesdites première et deuxième électrodes, la première électrode comprenant une première couche conductrice de diffusion des gaz et une première couche catalytique à base de carbone poreux et au contact de la membrane, la deuxième électrode comprenant une deuxième couche conductrice de diffusion des gaz et une deuxième couche catalytique à base de carbone poreux et au contact de la membrane.

La pile à combustible est destinée à fonctionner, lors d'au moins une phase de fonctionnement nominal, en générateur électrique. Lors de cette phase de fonctionnement nominal, la pile est classiquement alimentée en gaz réactifs - le combustible et le comburant, typiquement en hydrogène à l'anode (correspondant par exemple à la première électrode) et en oxygène à la cathode (correspondant par exemple à la deuxième électrode), et fournit un courant électrique par consommation des gaz réactifs. Le procédé d'activation comprend, lors d'une phase d'activation préalable à l'au moins une phase de fonctionnement nominal :
- Une alimentation électrique de la pile à combustible par un générateur électrique externe, ladite alimentation électrique étant configurée pour appliquer une tension d'activation par cellule supérieure ou égale à 1 V,
- Une alimentation fluidique en gaz humide au niveau de l'une au moins parmi les première et deuxième électrodes, ledit gaz humide présentant une Humidité Relative (HR) telle que 40% ≤ HR < 100%.

La pile à combustible fonctionne ainsi en électrolyse lors de la phase d'activation. Elle reçoit un courant électrique et de la vapeur d'eau issue du gaz humide, et produit notamment de l'hydrogène et de l'oxygène. La première électrode devient la cathode et la deuxième électrode devient l'anode, à l'inverse du fonctionnement en générateur.

Il a été remarqué que ce procédé permet d'améliorer considérablement les performances de la pile. Les mécanismes à l'origine de ces performances inattendues, explorés dans le cadre du développement de la présente invention, sont notamment expliqués dans la suite.

Le fonctionnement en électrolyse de la pile, pour une tension d'activation par cellule supérieure ou égale à 1 V, permet avantageusement de corroder une partie du carbone de l'anode, selon une réaction du type C + 2H₂O → CO₂ + 4H⁺ + 4e⁻. Cette corrosion engendre une modification de la porosité de l'anode. Cela libère des voies d'accès vers des sites catalytiques de la couche catalytique. Lors de la phase de fonctionnement nominal ultérieure, l'accès aux sites catalytiques est facilité pour les gaz réactifs.

Le dégagement d'Oz à l'anode, au coeur de la couche active, pourrait aussi être un facteur concomitant de libération de certaines voies d'accès pour les réactifs vers les sites catalytiques.

Le transport de matière, qui est la limitation prépondérante lors du fonctionnement de la pile en générateur à haute densité de courant, est ainsi amélioré. Cela permet d'augmenter la densité de courant fournie par la cellule et par la pile lors de la phase de fonctionnement nominal.

Le procédé d'activation selon l'invention améliore ainsi le fonctionnement nominal de la pile en mode générateur, notamment à haute densité de courant. Le rendement est amélioré pour une puissance nominale donnée. Corollairement, pour une puissance nominale donnée il est possible de réduire le nombre de cellules dans l'empilement, ce qui réduit le coût total de la pile.

De façon préférée, le procédé comprend en outre une étape de conditionnement dans laquelle la pile à combustible fonctionne en générateur électrique, ladite étape de conditionnement étant effectuée avant ou après la phase d'activation en électrolyse. Cette étape de conditionnement est effectuée de façon classique, par exemple selon un protocole recommandé par le fabricant de la pile ou selon un procédé de conditionnement divulgué par le document « Advances in rapid and effective break-in/conditioning/recovery of automotive PEMFC stacks, Shyam S. Kocha et al., Current Opinion in Electrochemistry, vol.31, 100843 (2022) ». Le procédé d'activation selon l'invention vient alors typiquement en complément du procédé de conditionnement classique. La durée additionnelle de conditionnement liée au procédé d'activation selon l'invention est de préférence inférieure ou égale à 5 minutes, et de préférence inférieure à 3 minutes. Cela permet d'obtenir un gain en performances pour un surcoût de conditionnement limité.

Un principe non intuitif de l'invention consiste ainsi à faire fonctionner brièvement les cellules en mode « électrolyse », c'est-à-dire que la pile devient le récepteur du générateur électrique externe, à une tension de cellule imposée typiquement supérieure à 1 V.

Selon un préjugé technique, un tel fonctionnement en électrolyse est déconseillé car cela peut engendrer une dégradation irréversible du catalyseur Pt/C de la cathode de la pile (lors de son fonctionnement en générateur), par exemple comme mentionné dans le document « Proton Exchange Membrane Fuel Cell Reversal: A Review, Congwei Qin et al., Catalysts, vol. 6, 197 (2016) ».

Lors du développement de la présente invention, il a été constaté que l'application d'une tension d'électrolyse typiquement comprise entre 1 V et 2 V par cellule, sous gaz humide en contrôlant l'Humidité Relative, n'altère pas les couches catalytiques. Celles-ci sont typiquement oxydées et passivées par un ou des oxydes PtOₓ lors de la phase d'activation par électrolyse, mais cet état d'oxydation est réversible. Dès que la pile fonctionne à nouveau en générateur, les oxydes PtOₓ sont réduits et les propriétés catalytiques sont restaurées, en conservant le bénéfice de la phase d'activation préalable par électrolyse.

En particulier, l'ouverture et/ou la création de pores par corrosion du carbone poreux environnant les nanoparticules de Pt, sont conservées.

Le procédé d'activation selon la présente invention permet ainsi d'améliorer l'accessibilité aux sites catalytiques « Pt métallique ». Le transport des réactifs jusqu'aux sites catalytiques est plus efficace et les performances de la pile sont améliorées.

Selon un autre aspect, l'invention porte sur un équipement comportant une pile à combustible comprenant une pluralité de cellules électrochimiques en empilement, chaque cellule comprenant une première électrode, une deuxième électrode, et une membrane échangeuse de protons intercalée entre lesdites première et deuxième électrodes, la première électrode comprenant une première couche conductrice de diffusion des gaz et une première couche catalytique à base de carbone poreux et au contact de la membrane, la deuxième électrode comprenant une deuxième couche conductrice de diffusion des gaz et une deuxième couche catalytique à base de carbone poreux et au contact de la membrane, l'équipement comprenant un générateur électrique et un système de contrôle-commande configuré pour :
- imposer à la pile à combustible une phase d'activation préalable à une phase de fonctionnement nominale de la pile, au cours de laquelle le système de contrôle-commande contrôle et commande :
   ∘une alimentation fluidique en gaz humide au niveau de l'une au moins parmi les première et deuxième électrodes, ledit gaz humide présentant une Humidité Relative (HR) telle que 40% ≤ HR < 100%,
   ∘Une alimentation électrique de la pile à combustible par le générateur électrique, ladite alimentation électrique étant configurée pour appliquer une tension d'activation par cellule supérieure à 1 V,
- de façon optionnelle, avant ou après la phase d'activation, effectuer une étape de conditionnement dans laquelle la pile à combustible fonctionne en générateur électrique, au cours de laquelle le système de contrôle-commande contrôle et commande :
   ∘une alimentation fluidique en hydrogène au niveau de la première électrode et en oxygène au niveau de la deuxième électrode,
   ∘une connexion électrique entre la pile à combustible et une charge configurée pour débiter un courant électrique.

Selon un autre aspect, l'invention porte sur une utilisation de cet équipement pour conditionner ou activer une pile à combustible, en conditionnement initial ou en complément d'un conditionnement initial.

### BREVE DESCRIPTION DES FIGURES

Les buts, objets, ainsi que les caractéristiques et avantages de l'invention ressortiront mieux de la description détaillée de modes de réalisation de cette dernière qui sont illustrés par les dessins d'accompagnement suivants dans lesquels :
La figure 1 présente un logigramme des étapes nécessaires (traits pleins) et optionnelles (traits pointillés) du procédé d'activation, selon un mode de réalisation de la présente invention.
La figure 2 présente schématiquement une cellule et son AME en mode de fonctionnement « électrolyse », selon un mode de réalisation de la présente invention.
La figure 3 présente schématiquement une cellule et son AME en mode de fonctionnement « générateur électrique », selon un mode de réalisation de la présente invention.
La figure 4 présente différentes courbes de polarisation après application du procédé d'activation à différentes durées d'activation.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les plaques bipolaires de connexion électriques ne sont pas représentées.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, l'alimentation fluidique est configurée pour maintenir un taux d'humidité au sein des cellules, notamment au niveau de la membrane de chaque cellule, compris entre +20% et -20% d'un taux d'humidité nominal de la membrane. Ce taux d'humidité nominal de la membrane peut être fourni par le fabricant. Il peut être mesuré par des mesures de résistance haute fréquence. Fonctionnellement, le gaz humide sert notamment à apporter l'eau nécessaire à la phase d'activation par électrolyse - qui est consommatrice d'eau -, et à hydrater la membrane pour favoriser la conduction protonique.

Selon un exemple, le procédé comprend en outre une étape de conditionnement dans laquelle la pile à combustible fonctionne en générateur électrique, ladite étape de conditionnement étant effectuée avant ou après la phase d'activation par électrolyse. La phase d'activation par électrolyse et l'étape de conditionnement sont typiquement complémentaires. La phase d'activation par électrolyse permet notamment d'ouvrir les pores de l'électrode à base de carbone poreux, par corrosion du carbone, pour améliorer l'accès des réactifs aux particules de catalyseur, en particulier aux nanoparticules de platine. L'étape de conditionnement permet typiquement de réduire les oxydes de platine pour rendre le catalyseur actif. L'étape de conditionnement permet également d'hydrater l'ionomère dans la membrane et les couches catalytiques. La réalisation d'une étape de conditionnement et d'une phase d'activation par électrolyse permet d'augmenter significativement les performances de la pile.

Selon un exemple, l'étape de conditionnement est effectuée avant la phase d'activation par électrolyse, et le procédé comprend en outre, après l'étape de conditionnement et avant la phase d'activation par électrolyse, une étape de mise en température de la pile configurée pour atteindre une température de pile comprise entre 20°C et 60°C. Le contrôle de la température favorise le contrôle de la cinétique de réaction lors de l'électrolyse. Plus la température est basse, moins la cinétique de corrosion du carbone est élevée. Cela permet de mieux maitriser les cinétiques de corrosion du carbone lors de la phase d'activation.

Selon un exemple, l'alimentation fluidique comprend une première alimentation en un premier gaz humide au niveau de la première électrode et une deuxième alimentation en un deuxième gaz humide au niveau de la deuxième électrode, lesdits premier et deuxième gaz humides présentant chacun une Humidité Relative (HR) telle que 40% ≤ HR < 100%. Cela permet d'améliorer l'apport en eau dans les couches catalytiques et/ou l'hydratation de l'ionomère nécessaire aux réactions d'électrolyse.. L'électrolyse est ainsi plus efficace lors de la phase d'activation. La durée de la phase d'activation peut par exemple être diminuée.

Selon un exemple, la première alimentation en un premier gaz humide est effectuée par recirculation d'hydrogène à Humidité Relative contrôlée. L'hydrogène est déjà le gaz utilisé pour les autres phases de conditionnement ou de fonctionnement de la pile. La mise en oeuvre du procédé d'activation est donc facilitée. Selon un exemple, la deuxième alimentation en un deuxième gaz humide est effectuée par injection ou recirculation d'azote à Humidité Relative contrôlée. L'azote n'est pas réactif. Cela évite des réactions non souhaitées lors de l'arrêt de l'alimentation électrique par le générateur externe, à la fin de la phase d'activation. Cela permet également d'éliminer l'oxygène produit par la réaction d'électrolyse lors de la phase d'activation et à la fin de la phase d'activation. Le potentiel électrique de l'électrode (anode en électrolyse, cathode en mode pile) diminue en conséquence. Cela permet typiquement de réduire les oxydes de platine formés lors de la phase d'activation.

Selon un exemple, la phase d'activation est effectuée à une température inférieure ou égale à 60°C, de préférence inférieure ou égale à 40°C. Plus la température est basse, moins la cinétique de corrosion du carbone est élevée. Cela permet de mieux maitriser les cinétiques de corrosion du carbone lors de la phase d'activation.

Selon un exemple, la tension d'activation appliquée à chaque cellule est comprise entre 1 V et 2 V, de préférence entre 1 V et 1,6 V. Cela permet d'obtenir une réaction de corrosion du carbone significative, sans être excessivement rapide. Plus la tension d'activation est élevée, plus la cinétique de corrosion du carbone est élevée. Une tension comprise entre 1 V et 2 V, de préférence entre 1 V et 1,6 V, permet de mieux maitriser les cinétiques de corrosion du carbone lors de la phase d'activation.

Selon un exemple, la tension d'activation appliquée est constante pendant la phase d'activation, sans cyclage en dessous de 1 V. Un cyclage en tension répété en dessous de 1 V peut provoquer un réarrangement atomique des particules de platine (par un mécanisme de réduction/dissolution) induisant une perte de surface active.

Selon un exemple, le procédé comprend successivement :
- une étape de conditionnement dans laquelle la pile à combustible fonctionne en générateur électrique, ladite étape de conditionnement comprenant :
   ∘une alimentation fluidique en hydrogène au niveau de la première électrode et en oxygène au niveau de la deuxième électrode,
   ∘une connexion électrique entre la pile à combustible et une charge configurée de sorte à obtenir une première circulation d'électrons depuis la première électrode vers la deuxième électrode,
- un arrêt de l'alimentation fluidique en oxygène au niveau de la deuxième électrode,
- une déconnexion de la charge,
- la phase d'activation par électrolyse, comprenant :
   ∘l'alimentation ou un maintien de l'alimentation fluidique en hydrogène au niveau de la première électrode,
   ∘l'alimentation fluidique en gaz humide au niveau de la deuxième électrode, le gaz humide étant de l'azote,
   ∘l'alimentation électrique de la pile à combustible par le générateur électrique externe, ladite alimentation électrique étant configurée pour appliquer une tension d'activation par cellule comprise entre 1 V et 1,6 V, de façon à obtenir une deuxième circulation d'électrons depuis la deuxième électrode vers la première électrode
- un arrêt de l'alimentation électrique par le générateur électrique externe, après une durée de phase d'activation inférieure ou égale à 300 s,
- un arrêt de l'alimentation fluidique en hydrogène au niveau de la première électrode,
- une élimination de l'oxygène produit lors de la phase d'activation au niveau de la deuxième électrode, en maintenant l'alimentation fluidique en azote, puis
- un arrêt de l'alimentation fluidique en azote au niveau de la deuxième électrode.

Selon un exemple, le procédé comprend en outre, après l'étape de conditionnement et avant la phase d'activation, une étape de refroidissement ou de réchauffement de la pile de façon à ce que la température au niveau des cellules soit comprise entre 20°C et 60°C, de préférence entre 20°C et 40°C. Plus la température est basse, moins la cinétique de corrosion du carbone est élevée. Cela permet de mieux maitriser les cinétiques de corrosion du carbone lors de la phase d'activation.

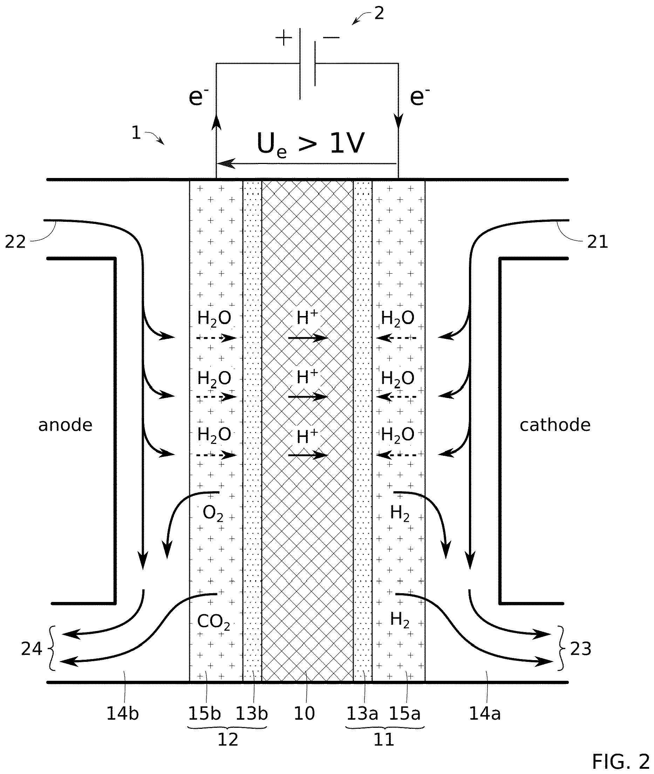

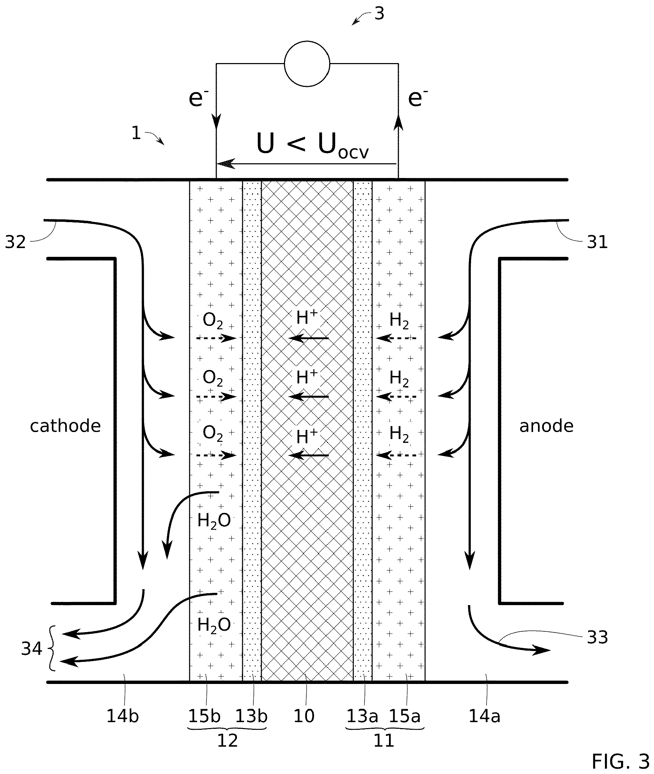

Sauf incompatibilité, des caractéristiques techniques décrites en détail pour un mode de réalisation donné peuvent être combinées aux caractéristiques techniques décrites dans le contexte d'autres modes de réalisation décrits à titre exemplaire et non limitatif. En particulier, des éléments décrits ou illustrés sur les figures pour la pile ou pour le procédé peuvent être combinés de manière à former un autre mode de réalisation qui n'est pas nécessairement illustré ou décrit. Un tel mode de réalisation n'est évidemment pas exclu de l'invention. Pour des raisons de clarté, une seule cellule est illustrée aux figures 2 et 3. Une pile à combustible selon la présente invention comprend typiquement plusieurs cellules électrochimiques en empilement. L'homme du métier n'aura aucune difficulté à mettre en oeuvre un mode de réalisation du procédé pour une ou plusieurs cellules électrochimiques.

Dans le cadre de la présente invention, on entend par « pile à combustible » un système comprenant une ou plusieurs cellules électrochimiques interconnectées. Les cellules se présentent typiquement sous forme d'un Assemblage Membrane-Electrodes couramment désigné AME. Le procédé d'activation s'applique ici de préférence à une pile dimensionnée pour des applications industrielles. Ainsi la pile comprend de préférence une pluralité de cellules électrochimiques, qui forment typiquement un empilement de puissance. La pile comprend ici de préférence au moins cinq cellules en empilement au sein de l'AME, et de préférence au moins dix.

La pile présente typiquement différentes phases de fonctionnement, en particulier, une ou plusieurs phases de conditionnement initial, une ou plusieurs phases de production nominales, éventuellement une ou plusieurs phases de régénération, une phase d'arrêt.

Lors d'une phase de fonctionnement ou de production nominale de la pile, les cellules de la pile sont typiquement alimentées en combustible et en comburant à des concentrations nominales et selon des débits nominaux. La pile débite un courant et la puissance de la pile peut être régulée soit en tension, soit en courant. La pile fonctionne ainsi en générateur électrique.

Le procédé d'activation selon la présente invention traite plus particulièrement des phases de conditionnement initial, également appelées activation ou rodage, qui interviennent avant la phase de fonctionnement nominale de la pile.

La ou les phases de conditionnement initial visent à amener les performances de la pile à un niveau de performances nominal, ou au moins à 90% du niveau de performances nominal, selon le critère de niveau d'atteinte souhaité. Selon les procédés de conditionnement ou d'activation classiques, la pile fonctionne en générateur électrique selon des paramètres d'alimentation fluidique et/ou de régulation qui ne sont pas nominaux. Selon un exemple connu, la pile est régulée en tension à basse tension, typiquement à une tension ≤ 0,5V. Selon un autre exemple connu, les cellules peuvent être alimentées par un fluide d'alimentation présentant une fraction molaire de comburant réduite.

L'idée originale mise en oeuvre dans le cadre du développement de la présente invention consiste notamment à effectuer une phase d'activation en électrolyse, pendant laquelle la pile consomme du courant électrique et de l'eau, et produit notamment de l'oxygène, de l'hydrogène et du dioxyde de carbone.

Lors d'une phase de régénération de la pile, la pile fonctionne typiquement en générateur électrique, selon des paramètres d'alimentation fluidique et/ou de régulation qui ne sont pas nominaux, comme pour le conditionnement. Par exemple, les cellules peuvent être alimentées par un fluide d'alimentation présentant une fraction molaire de comburant réduite.

Lors d'une phase d'arrêt, la pile n'est plus alimentée en combustible et/ou en comburant. La pile peut continuer à produire un courant électrique temporairement et de façon dégressive.

On entend par « Humidité Relative (HR) » la quantité de vapeur d'eau présente dans un gaz, exprimée en pourcentage (% HR) de la quantité nécessaire pour atteindre un niveau de saturation, à une température donnée et une pression donnée. L'Humidité Relative correspond ainsi au rapport de la pression partielle de la vapeur d'eau contenue dans le gaz sur la pression de vapeur saturante, pour une même température. Elle peut typiquement être mesurée à l'aide d'un hygromètre. La température de référence est typiquement la température de la pile, de préférence la température de la cellule. Plusieurs modes de réalisation de l'invention mettant en oeuvre des étapes successives du procédé d'activation sont décrits ci-après. Sauf mention explicite, l'adjectif « successif » n'implique pas nécessairement, même si cela est généralement préféré, que les étapes se suivent immédiatement, des étapes intermédiaires pouvant les séparer.

Par ailleurs, le terme « étape » s'entend de la réalisation d'une partie du procédé, et peut désigner un ensemble de sous-étapes.

Par ailleurs, le terme « étape » ne signifie pas obligatoirement que les actions menées durant une étape soient simultanées ou immédiatement successives. Certaines actions d'une première étape peuvent notamment être suivies d'actions liées à une étape différente, et d'autres actions de la première étape peuvent être reprises ensuite. Ainsi, le terme étape ne s'entend pas forcément d'actions unitaires et inséparables dans le temps et dans l'enchaînement des phases du procédé.

Dans la présente demande, une tension d'activation Uₑ est appliquée par un générateur externe. Le générateur externe ne fait pas partie de la pile. La tension d'activation Uₑ correspond ici à la différence de potentiel entre l'anode et la cathode de la pile ou de la cellule considérée. Cette tension d'activation peut donc être directement mesurée sur la pile. Elle est supérieure ou égale à 1 V. La tension d'activation Uₑ est également appelée « tension d'électrolyse » ou encore « tension de cellule » ou simplement « tension » dans la suite, sans ambiguïté pour l'homme du métier.

Dans la présente demande, sur les figures d'illustration le sens du courant électrique représenté par des flèches correspond au sens réel de circulation des électrons. Le flux d'électrons circule ainsi depuis l'anode vers la cathode. Cette convention est vraie aussi bien en mode générateur qu'en mode électrolyse.

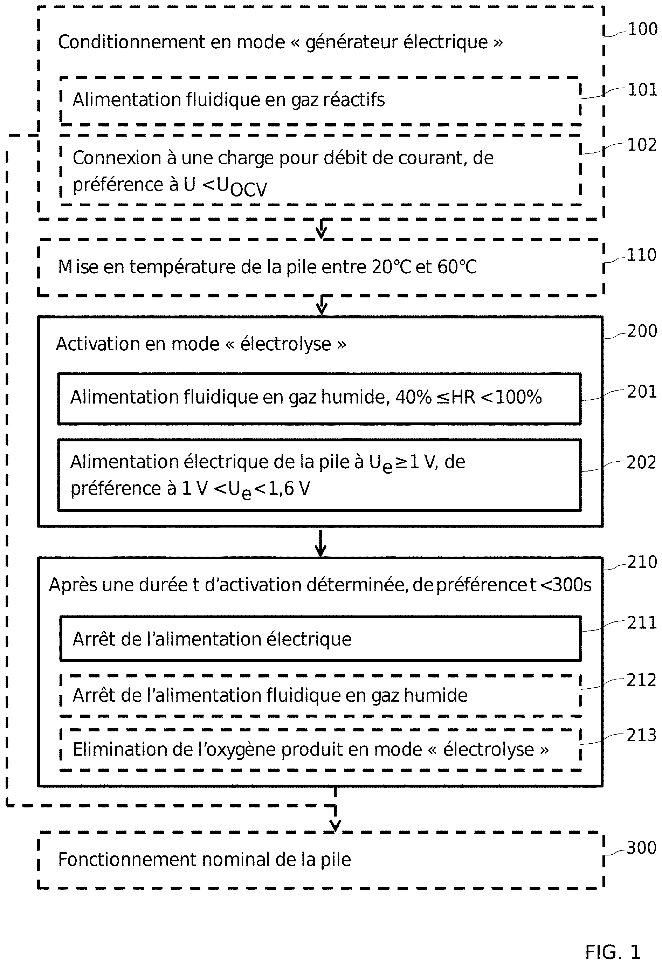

La figure 1 est un logigramme du procédé d'activation selon un mode de réalisation de la présente invention.

Les traits pointillés indiquent des étapes optionnelles du procédé d'activation. Les traits pleins indiquent les principales étapes du procédé d'activation.

Selon une possibilité, un conditionnement 100 ou pré-conditionnement de la pile est d'abord effectué. Un tel conditionnement 100 peut se faire de façon standard, selon les conditions opératoires préconisées par le fabricant. Lors de ce conditionnement 100, la pile est typiquement alimentée 101 en gaz réactifs, par exemple en air ou en oxygène à la cathode et en hydrogène à l'anode, et une charge est connectée 102 aux électrodes de façon à ce que la pile débite un courant électrique entre l'anode et la cathode, à une tension U de préférence inférieure ou égale à 0,8 V.

Selon une possibilité, la pile est mise en température 110 de façon à obtenir une température de pile comprise entre 20°C et 60°C. Cela peut impliquer un chauffage ou préchauffage, typiquement si la pile n'a pas été soumise au conditionnement 100 immédiatement avant la phase d'activation 200. Cela peut impliquer un refroidissement, typiquement si la pile a été soumise au conditionnement 100 immédiatement avant la phase d'activation 200.

La phase d'activation 200 en électrolyse de la pile peut être effectuée seule ou de préférence en complément du conditionnement 100. Si le conditionnement 100 a été effectué préalablement à la phase d'activation 200, la distribution en comburant (air ou oxygène) est de préférence arrêtée. La charge est de préférence déconnectée ou arrêtée. Lors de la phase d'activation 200 par électrolyse, la pile est alimentée 201 en gaz humides, et connectée à un générateur électrique externe configuré pour faire circuler 202 un courant électrique au travers de la pile à une tension d'activation Uₑ supérieure à la tension de la pile en circuit ouvert Uocv.

Si le conditionnement 100 a été effectué préalablement à la phase d'activation 200, la distribution en hydrogène peut être maintenue, par exemple par recirculation, en contrôlant l'Humidité Relative (HR) de sorte que l'hydrogène présente une Humidité Relative supérieure ou égale à 40%. Alternativement, si le conditionnement 100 n'a pas été effectué avant la phase d'activation 200, un gaz humide d'au moins 40% HR et strictement inférieur à 100% HR est injecté au niveau de l'électrode qui devient cathode en configuration d'électrolyse. Ce gaz humide peut être de l'hydrogène, de l'azote ou un gaz inerte par exemple.

Cette alimentation en gaz humide, de préférence par balayage en continu, permet d'apporter l'eau nécessaire à la réaction d'électrolyse et/ou d'hydrater la membrane de la cellule.

Si le conditionnement 100 a été effectué préalablement à la phase d'activation 200, la distribution en oxygène au niveau de l'autre électrode, qui devient anode en configuration d'électrolyse, est de préférence arrêtée et remplacée par une distribution de gaz humide présentant une Humidité Relative HR telle que 40% ≤ HR < 100%, par exemple de l'azote. L'oxygène résiduel issu de la phase de conditionnement 100 est de préférence éliminé pour que la tension de cellule U diminue, de préférence jusqu'à environ 0,1 V. L'élimination de l'oxygène peut se faire par remplacement progressif par l'azote, ou selon une autre possibilité par consommation de l'oxygène restant en activant brièvement la charge.

Avant de connecter le générateur externe à la pile pour démarrer l'électrolyse, la température de la pile est de préférence fixée entre 20°C et 60°C, de préférence entre 20°C et 40°C, par exemple de l'ordre de 30°C. La cinétique des réactions survenant lors de l'électrolyse est ainsi diminuée. Cela permet d'avoir un meilleur contrôle de ces réactions, en particulier vis-à-vis de la corrosion du carbone qui est l'une des réactions d'intérêt survenant lors de l'électrolyse.

Le générateur externe est ensuite connecté, borne « + » du générateur à l'anode en configuration d'électrolyse, afin d'appliquer 202 une tension d'activation Uₑ aux cellules, de préférence constante et comprise entre 1 et 1,6 V. Une tension d'activation Uₑ ≤ 1,6 V permet de mieux contrôler les cinétiques de réactions.

Après une durée t d'activation à choisir 210 par l'utilisateur, selon un critère économique par exemple, typiquement 10 s < t < 300 s, l'alimentation électrique fournie par le générateur externe est arrêtée 211. Cela permet d'arrêter l'électrolyse. La phase d'activation 200 se termine. L'alimentation fluidique en gaz humide peut être arrêtée 212. L'oxygène produit à l'anode en configuration d'électrolyse est de préférence éliminé 213 pour abaisser le potentiel d'électrode et ainsi réduire les oxydes de platine formés lors de l'électrolyse. L'élimination de l'oxygène peut se faire en continu par le balayage d'azote humide utilisé lors de l'électrolyse, ou selon une autre possibilité par consommation de l'oxygène restant en connectant et activant brièvement la charge jusqu'à atteindre une tension de cellule U < 0,8 V, et préférentiellement U < 0,2 V, par exemple U ≈ 0,1 V. Alternativement, si le conditionnement 100 n'a pas été effectué avant la phase d'activation 200, le conditionnement 100 peut être effectué après la phase d'activation. Cela permet également de réduire les oxydes de platine et d'activer le catalyseur.

La phase d'activation 200, avec pré-conditionnement ou post-conditionnement 100, permet avantageusement d'appréter la pile pour un fonctionnement 300 nominal. Les performances nominales de la pile sont améliorées grâce au procédé d'activation.

La figure 2 illustre une cellule 1 d'une pile connectée à un générateur électrique 2 externe en configuration d'électrolyse, selon un mode de réalisation de la phase d'activation selon l'invention.

La cellule comprend typiquement une membrane 10, une première couche catalytique 13a, une première couche de diffusion des gaz 15a reliée à un premier circuit fluidique 14a, et une deuxième couche catalytique 13b, une deuxième couche de diffusion des gaz 15b reliée à un deuxième circuit fluidique 14b. La membrane 10 est de préférence à base d'un ionomère perfluoro-sulfoné, par exemple à base de NAFION^{®}. Les première et deuxième couches de diffusion 11, 12 sont de préférence à base de carbone poreux. Les première et deuxième couches catalytiques 13a, 13b sont de préférence à base de nanoparticules de platine supportées par du carbone poreux et de l'ionomère. La première couche de diffusion des gaz 15a et la première couche catalytique 13a forment la première électrode 11. La deuxième couche de diffusion des gaz 15b et la deuxième couche catalytique 13b forment la deuxième électrode 12.

Les première et deuxième électrodes 11, 12 sont destinées à être connectées électriquement soit à une charge (mode pile) soit à un générateur (mode électrolyse). Cette connexion électrique est schématisée sur les figures 2 et 3. En pratique, cette connexion électrique se fait typiquement par l'intermédiaire de plaques bipolaires (non illustrées) électriquement conductrices. De façon connue, les plaques bipolaires sont généralement en contact électrique direct avec les couches de diffusion des gaz 15a, 15b. Elles permettent la mise en série électrique des différentes cellules de l'empilement qui forme la pile. Alternativement, les plaques bipolaires peuvent dans certains cas être en contact direct avec les couches catalytiques, pouvant être alors considérées comme des couches de diffusion des gaz.

En mode électrolyse, la première électrode 11 correspond à la cathode et la deuxième électrode 12 correspond à l'anode. Le générateur électrique 2 externe est connecté par sa borne « + » à l'anode et par sa borne « - » à la cathode. Le générateur électrique 2 externe impose ainsi un flux d'électrons circulant ainsi depuis l'anode vers la cathode. Dans cet exemple, la cathode est alimentée par un premier gaz humide 21 via le premier circuit fluidique 14a. Ce premier gaz humide 21 peut être de l'hydrogène ou de l'azote par exemple. D'autres gaz sont également envisageables, par exemple des gaz inertes. L'eau apportée par le premier gaz humide 21 va traverser la première couche de diffusion des gaz 15a, la première couche catalytique 13a, et hydrater la membrane 10.

L'anode est alimentée par un deuxième gaz humide 22 via le deuxième circuit fluidique 14b. Ce deuxième gaz humide 22 peut être de l'azote ou de l'air humide par exemple. D'autres gaz sont également envisageables. L'eau apportée par le deuxième gaz humide 22 va traverser la deuxième couche de diffusion des gaz 15b, la deuxième couche catalytique 13b, et hydrater la membrane 10.

Le générateur 2 est configuré pour délivrer un courant au travers de la cellule, avec une tension d'activation Uₑ sensiblement constante entre les électrodes 11, 12. Cette tension d'activation Uₑ est supérieure ou égale à 1 V. En particulier, la tension d'activation Uₑ est choisie telle que 1 V < Uₑ < 2 V, de préférence 1 V < Uₑ ≤ 1,6 V.

L'eau va se dissocier sous l'effet du courant électrique et produire de l'hydrogène au niveau de la première couche catalytique 13a, de l'oxygène au niveau de la deuxième couche catalytique 13b, du dioxyde de carbone au contact du carbone de la deuxième couche catalytique 13b, et des oxydes de platine au contact du platine de la deuxième couche catalytique 13b selon les demi-réactions suivantes :
A l'anode :

   H₂O→ ½O₂ + 2H⁺ + 2e⁻

   C + 2H₂O → CO₂ + 4H⁺ + 4e⁻

   Pt + H₂O → Pt-O + 2H⁺ + 2e⁻
A la cathode :

   2H⁺ + 2e⁻ → H₂

Les protons H⁺ traversent la membrane 10 échangeuse de protons, depuis l'anode vers la cathode. L'hydrogène 23 peut être récupéré en sortie du premier circuit fluidique 14a. L'oxygène et le dioxyde de carbone 24 peuvent être évacués en sortie du deuxième circuit fluidique 14b.

Ces réactions se produisent pour Uₑ ≥ 1 V et de préférence Uₑ ≥ 1,2V. La corrosion maîtrisée du carbone est l'un des aspects du procédé d'activation qui contribuent à augmenter les performances de la pile lors de son fonctionnement nominal.

La figure 3 illustre une cellule 1 d'une pile, connectée à une charge 3, en configuration de générateur électrique (mode pile). Une telle configuration correspond notamment au fonctionnement nominal de la pile. Une telle configuration correspond également à un conditionnement standard de la pile avant son fonctionnement nominal.

En mode pile, la première électrode 11 correspond à l'anode et la deuxième électrode 12 correspond à la cathode. Les deux électrodes 11, 12 sont connectées à une charge 3.

Dans cet exemple, l'anode est alimentée par un gaz combustible 31, typiquement de l'hydrogène, via le premier circuit fluidique 14a. La cathode est alimentée par un gaz comburant 32, typiquement de l'oxygène ou de l'air, via le deuxième circuit fluidique 14b. De façon connue, l'hydrogène et l'oxygène traversent respectivement les première et deuxième couches de diffusion de gaz 15a, 15b et réagissent respectivement au sein de la première couche catalytique 13a et de la deuxième couche catalytique 13b. L'hydrogène et l'oxygène réagissent pour produire de l'eau, de la chaleur et du courant électrique. L'hydrogène non consommé 33 peut être récupéré en sortie du premier circuit fluidique 14a. Le gaz 34 appauvri en comburant et l'eau peuvent être évacués et/ou récupérés en sortie du deuxième circuit fluidique 14b.

La charge 3 est configurée pour absorber le flux d'électrons généré par la pile. Ce flux d'électrons circule depuis l'anode vers la cathode. La tension U entre les électrodes 11, 12, pour une phase de conditionnement initial, est typiquement inférieure à la tension de la pile en circuit ouvert Uocv.

Une telle phase de conditionnement initial, effectuée en combinaison avec la phase d'activation, avant ou après ladite phase d'activation, permet d'obtenir des gains significatifs en performances lors du fonctionnement nominal de la pile.

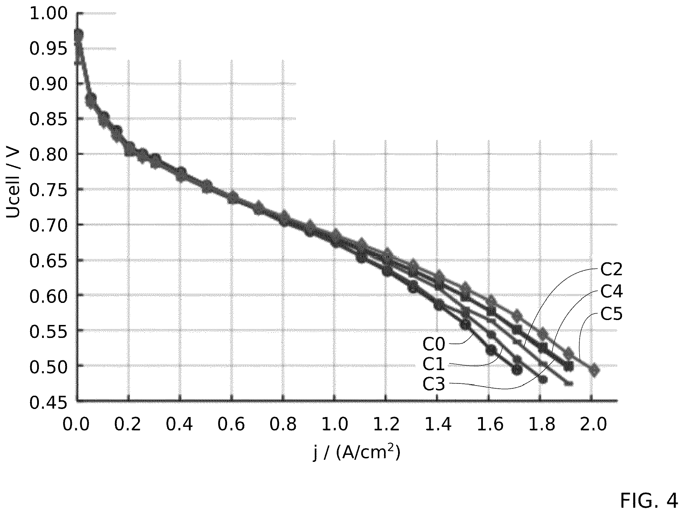

Selon un exemple, après conditionnement initial, une phase d'activation à faible température, de l'ordre de 30°C, en maintenant une humidité de l'ordre de 80% HR, et à une tension d'activation Uₑ comprise entre 1,4 V et 1,6 V, est effectuée. Cela permet de corroder le carbone de façon suffisante et sans excès, tout en maîtrisant facilement les cinétiques de réactions. La reproductibilité du procédé d'activation est ainsi améliorée. Les performances de la pile ont été évaluées par des mesures de performance par des courbes de polarisation. La figure 4 présente des courbes de polarisation obtenues après mise en oeuvre du procédé d'activation, pour différentes durées t de la phase d'activation par électrolyse : t = 30 s (C₁), t = 90 s (C₂), t = 150 s (C₃), t = 210 s (C₄), t = 270 s (Cs). La phase d'activation a été effectuée en circulation d'hydrogène à la cathode et en circulation d'azote à l'anode, à 80% HR à 30°C, et pour une tension d'activation Uₑ = 1,6 V. Les courbes de polarisation C₁...C₅ sont comparées à la courbe de polarisation C₀ effectuée pour une pile ayant été conditionnée uniquement par la phase de conditionnement initial, sans phase d'activation par électrolyse. A 1.5 A/cm², le gain maximal (courbe C₅) est d'environ 50 mV (soit environ 9% en tension). A 0.55 V, le gain maximal (courbe C₅) est de 0.3 A/cm² (soit environ 20% en puissance). Les performances de la pile sont donc significativement améliorées notamment à basse tension U < 0,7 V et pour des densités de courant importantes.

Des mesures de voltampérométrie cyclique complémentaires de la couche catalytique 13b sous gaz inerte (non illustrées) montrent également que la pile ne souffre d'aucune altération significative de la surface électroactive de platine après la phase d'activation par électrolyse selon le procédé d'activation. Les performances de la pile pour une tension supérieure à 0,8 V ne sont pas dégradées par cette phase d'activation par électrolyse.

Il apparaît ainsi clairement que le procédé d'activation selon l'invention est très efficace et permet un gain de performances significatif par rapport aux procédés de conditionnement selon l'état de l'art. Il peut avantageusement être mis en oeuvre dans le cadre d'un conditionnement initial de la pile, avant toute utilisation en phase de fonctionnement nominale.

Les paramètres de la phase d'activation décrite ci-dessus peuvent être ajustés et optimisés en fonction de la conception de l'AME ou d'un niveau de performances à atteindre pour la pile.

Le choix des paramètres de la phase d'activation peut être validé par des mesures de performances, par exemple en effectuant une comparaison de courbes de polarisation avant et après mise en oeuvre du procédé d'activation.

Ces mesures peuvent être complétées par une évaluation de l'évolution de la résistance de diffusion ou de polarisation, par spectroscopie d'impédance (résistance à minimiser). Ces mesures peuvent être complétées par des mesures de performances à un ou plusieurs points de fonctionnement spécifique, par exemple à la puissance ou à la densité de courant nominale, et maximale.

Ces mesures peuvent être complétées par une évaluation de l'évolution de la surface électroactive de platine par voltampérométrie cyclique (pertes à minimiser).

L'invention n'est pas limitée aux modes de réalisations précédemment décrits. Toutes les possibilités d'activation, avec ou sans conditionnement initial, pour une pile comprenant une ou plusieurs cellules, avec recirculation ou injection de gaz humide, peuvent être envisagées.

## Revendications

1. Procédé d'activation d'une pile à combustible comprenant une pluralité de cellules (1) électrochimiques en empilement, chaque cellule (1) comprenant une première électrode (11), une deuxième électrode (12), et une membrane (10) échangeuse de protons intercalée entre lesdites première et deuxième électrodes (11, 12), la première électrode (11) comprenant une première couche (15a) conductrice de diffusion des gaz et une première couche catalytique (13a) à base de carbone poreux et au contact de la membrane (10), la deuxième électrode (12) comprenant une deuxième couche (15b) conductrice de diffusion des gaz et une deuxième couche catalytique (13b) à base de carbone poreux et au contact de la membrane (10),
la pile à combustible étant destinée à fonctionner, lors d'au moins une phase de fonctionnement nominale (300), en générateur électrique,
le procédé comprenant, lors d'une phase d'activation (200) préalable à l'au moins une phase de fonctionnement nominale (300) :
- Une alimentation électrique (202) de la pile à combustible par un générateur électrique (2) externe, ladite alimentation électrique étant configurée pour appliquer une tension d'activation par cellule (1) supérieure ou égale à 1V,
- Une alimentation fluidique (201) en gaz humide au niveau de l'une au moins parmi les première et deuxième électrodes (11, 12), ledit gaz humide présentant une Humidité Relative (HR) telle que 40% ≤ HR < 100%,
de sorte que la pile à combustible fonctionne en électrolyse lors de la phase d'activation (200) dite par électrolyse,
le procédé étant **caractérisé en ce que** l'alimentation fluidique (201) comprend une première alimentation en un premier gaz (21) humide au niveau de la première électrode (11) et une deuxième alimentation en un deuxième gaz (22) humide au niveau de la deuxième électrode (12), lesdits premier et deuxième gaz humides présentant chacun une Humidité Relative (HR) telle que 40% ≤ HR < 100%,
et **en ce que** la première alimentation en un premier gaz (21) humide est effectuée par recirculation d'hydrogène à Humidité Relative contrôlée et la deuxième alimentation en un deuxième gaz (22) humide est effectuée par injection ou recirculation d'azote à Humidité Relative contrôlée.

2. Procédé selon la revendication précédente comprenant en outre une étape de conditionnement dans laquelle la pile à combustible fonctionne en générateur électrique, ladite étape de conditionnement (100) étant effectuée avant ou après la phase d'activation (200) par électrolyse.

3. Procédé selon la revendication précédente dans lequel l'étape de conditionnement (100) est effectuée avant la phase d'activation (200) par électrolyse, ledit procédé comprenant en outre, après l'étape de conditionnement (100) et avant la phase d'activation (200) par électrolyse, une étape de mise en température (110) de la pile configurée pour atteindre une température de pile comprise entre 20°C et 60°C.

4. Procédé selon l'une quelconque des revendications précédentes dans lequel la phase d'activation (200) est effectuée à une température inférieure ou égale à 60°C, de préférence inférieure ou égale à 40°C.

5. Procédé selon l'une quelconque des revendications précédentes dans lequel la tension d'activation appliquée à chaque cellule (1) est comprise entre 1 V et 2 V, et préférentiellement entre 1 V et 1,6 V.

6. Procédé selon l'une quelconque des revendications précédentes dans lequel la tension d'activation appliquée est constante pendant la phase d'activation (200), sans cyclage en dessous de 1 V.

7. Procédé selon l'une quelconque des revendications précédentes comprenant successivement :
• une étape de conditionnement (100) dans laquelle la pile à combustible fonctionne en générateur électrique, ladite étape de conditionnement comprenant :
- une alimentation fluidique (101) en hydrogène (31) au niveau de la première électrode (11) et en oxygène (32) au niveau de la deuxième électrode (12),
- une connexion (102) électrique entre la pile à combustible et une charge (3), de sorte à obtenir une première circulation d'électrons depuis la première électrode (11) vers la deuxième électrode (12),
• un arrêt de l'alimentation fluidique en oxygène au niveau de la deuxième électrode (12),
• une déconnexion de la charge (3),
• la phase d'activation (200) par électrolyse comprenant :
- l'alimentation (201) ou un maintien de l'alimentation fluidique en hydrogène au niveau de la première électrode (11),
- l'alimentation (201) fluidique en gaz (22) humide au niveau de la deuxième électrode (12), le gaz humide étant de l'azote,
- l'alimentation électrique (202) de la pile à combustible par le générateur électrique (2) externe, ladite alimentation électrique étant configurée pour appliquer une tension d'activation comprise entre 1V et 1,6V, de façon à obtenir une deuxième circulation d'électrons depuis la deuxième électrode (12) vers la première électrode (11),
• un arrêt (211) de l'alimentation électrique par le générateur électrique (2) externe, après une durée t de phase d'activation (210) inférieure ou égale à 300 s,
• un arrêt (212) de l'alimentation fluidique en hydrogène au niveau de la première électrode (11),
• une élimination (213) de l'oxygène produit lors de la phase d'activation au niveau de la deuxième électrode (12), en maintenant l'alimentation fluidique en azote, puis
• un arrêt (212) de l'alimentation fluidique en azote au niveau de la deuxième électrode (12).

8. Procédé selon la revendication précédente comprenant en outre, après l'étape de conditionnement (100) et avant la phase d'activation (200), une étape de mise en température (110), par exemple un refroidissement ou un réchauffement de la pile, de façon à ce que la température au niveau des cellules (1) soit comprise entre 20°C et 60°C, de préférence entre 20°C et 40°C.

9. Equipement comportant une pile à combustible comprenant une pluralité de cellules électrochimiques en empilement, chaque cellule (1) comprenant une première électrode (11), une deuxième électrode (12), et une membrane (10) échangeuse de protons intercalée entre lesdites première et deuxième électrodes (11, 12), la première électrode (11) comprenant une première couche (15a) conductrice de diffusion des gaz et une première couche catalytique (13a) à base de carbone poreux et au contact de la membrane (10), la deuxième électrode (12) comprenant une deuxième couche (15b) conductrice de diffusion des gaz et une deuxième couche catalytique (13b) à base de carbone poreux et au contact de la membrane (10), l'équipement comprenant un générateur électrique (2) et un système de contrôle-commande configuré pour :
• imposer à la pile à combustible une phase d'activation (200) préalable à une phase de fonctionnement nominale de la pile, au cours de laquelle le système de contrôle-commande contrôle et commande :
- une alimentation fluidique (201) en hydrogène au niveau de la première électrode (11) et en azote au niveau de la deuxième électrode (12), l'hydrogène et l'azote présentant une Humidité Relative (HR) telle que 40% ≤ HR < 100%,
- Une alimentation électrique (202) de la pile à combustible par le générateur électrique (2), ladite alimentation électrique étant configurée pour appliquer une tension d'activation par cellule (1) supérieure ou égale à 1V.

10. Equipement selon la revendication précédente dans lequel le système de contrôle-commande est configuré pour :
• avant ou après la phase d'activation (200), effectuer une étape de conditionnement (100) dans laquelle la pile à combustible fonctionne en générateur électrique, au cours de laquelle le système de contrôle-commande contrôle et commande :
- une alimentation fluidique (101) en hydrogène au niveau de la première électrode (11) et en oxygène au niveau de la deuxième électrode (12),
- une connexion électrique (102) des première et deuxième électrodes (11, 12) avec une charge (3) configurée pour débiter un courant électrique entre les première et deuxième électrodes (11, 12).

11. Equipement selon la revendication précédente dans lequel l'étape de conditionnement (100) est effectuée avant la phase d'activation (200) par électrolyse, et dans lequel le système de contrôle-commande est configuré pour effectuer, après l'étape de conditionnement (100) et avant la phase d'activation (200) par électrolyse, une étape de mise en température (110) de la pile pour atteindre une température de pile comprise entre 20°C et 60°C.

12. Utilisation de l'équipement selon l'une quelconque des trois revendications précédentes pour conditionner ou activer une pile à combustible.
